Europäisches Patentamt

European Patent Office

Office européen des brevets

(11) Veröffentlichungsnummer: **0 243 823**
**A2**

(12) **EUROPÄISCHE PATENTANMELDUNG**

(21) Anmeldenummer: 87105704.8

(51) Int. Cl.4: **H04N 9/82**

(22) Anmeldetag: 16.04.87

(30) Priorität: 25.04.86 DE 3614043

(43) Veröffentlichungstag der Anmeldung:
04.11.87 Patentblatt 87/45

(84) Benannte Vertragsstaaten:
AT BE CH DE ES FR GB GR IT LI LU NL SE

(71) Anmelder: Deutsche Thomson-Brandt GmbH
Hermann-Schwer-Strasse 3 Postfach 2060
D-7730 Villingen-Schwenningen(DE)

(72) Erfinder: Kluth, Hans-Jürgen, Ing.-grad.
Weichselstrasse 11
D-7733 VS-Villingen(DE)

(74) Vertreter: Einsel, Robert, Dipl.-Ing.
Deutsche Thomson-Brandt GmbH Patent-
und Lizenzabteilung Göttinger Chaussee 76
D-3000 Hannover 91(DE)

(54) **Videorecorder mit verbesserter Tonaufzeichnung.**

(57) Videorecorder, bei dem der Ton durch Frequenzmodulation eines eines Tonträgers (T1u, T2u)
zusammen mit dem Bildträger aufgezeichnet und bei
der Wiedergabe zum Zeitfehlerausgleich mit einem
Mischträger (M) umgesetzt wird. Erfindungsgemäß
wird der Mischträger als Pilotträger (P) aufgezeichnet, der zusätzlich zur Kennung Mono-Stereo-Zweisprachen dienen kann.

Fig. 1

EP 0 243 823 A2

Xerox Copy Centre

## Videorecorder mit verbesserter Tonaufzeichnung

Bei Videorecordern nach den Systemen VHS, Betamax, V 2000 ist es bekannt, einen mit dem Videosignal frequenzmoduliertern Bildträger und einen in der Frequenz herabgesetzten quadraturmodulierten Farbträger mit Videoköpfen auf den sogenannten Schrägspuren eines Magnetbandes aufzuzeichnen. Dabei ist es auch bekannt, zusätzlich einen oder mehrere mit Tonsignalen frequenzmodulierte Tonträger zusammen mit dem Bildträger und dem Farbträger mit denselben Videoköpfen aufzuzeichnen. Die Frequenz der Tonträger liegt dabei z.B. zwischen dem Frequenzspektrum des Farbträgers und dem des Bildträgers oder auch innerhalb des Frequenzspektrums des Bildträgers. Durch diese Art der Tonaufzeichnung kann eine HiFi-Tonqualität erreicht werden.

Es wurde auch vorgeschlagen (P 36 08 796), den oder die Tonträger oberhalb des vom Bildträger eingenommenen Frequenzbereiches in einem Bereich von 6 bis 6,5 MHz aufzuzeichnen. Dieser Frequenzbereich wird vom Bildträger nicht benötigt und bei der Wiedergabe bei der Demodulation des Bildträgers unterdrückt. Vorzugsweise wird dieser zusätzliche Frequenzbereich durch besondere Schaltungsmittel wie Resonanzüberhöhungen an den Videoköpfen angehoben. Bei der Wiedergabe erfolgt eine Beseitigung von Zeitfehlern in dem Tonträger dadurch, daß der vom Band abgetastete Tonträger mit einem Mischträger umgesetzt wird, der durch Frequenzvervielfachung der vom Band abgetasteten Zeilensynchronimpulse gewonnen ist. Der entsprechend den Zeitfehlern modulierte Mischträger wird dabei vorzugsweise in einer PLL-Schaltung mit eingebautem Frequenzteiler aus den Zeilensynchronimpulsen gewonnen.

Der Erfindung liegt die Aufgabe zugrunde, den Schaltungsaufwand für die Erzeugung des Mischträgers bei der Wiedergabe zu verringern.

Diese Aufgabe wird durch die im Anspruch 1 beschriebene Erfindung gelöst. Vorteilhafte Weiterbildungen der Erfindung sind in den Unteransprüchen beschrieben.

Bei der Wiedergabe kann somit der zur Frequenzumsetzung und Zeitfehlerbefreiung des Tonträgers dienende Mischträger unmittelbar dem Magnetband entnommen werden und braucht daher nicht gesondert erzeugt zu werden. Der Pilotträger muß zwar bei der Aufnahme durch Schaltungsmittel erzeugt werden. Die Erzeugung eines derartigen Trägers bei der Aufnahme ist aber problemloser als bei der Wiedergabe, da bei der Aufnahme die Signale noch nicht die durch die Aufzeichnung hervorgerufenen Verzerrungen und Fehler aufweisen. Insbesondere haben die Signale bei der Aufnahme noch nicht die durch die Aufzeichnung bewirkten Zeitfehler. Der oder die Tonträger haben wegen der relativ geringen Bandbreite des NF-Signals von 20 kHz nur Seitenbänder in der Größenordnung von ± 50 kHz. Der Pilotträger hat praktisch gar keine Seitenbänder, da er nur aus einer singulären Frequenz besteht. Geringe Seitenbänder können allenfalls durch Frequenzmodulation des Pilotträgers aufgrund der Zeitfehler durch Geschwindigkeitsschwankungen des Magnetbandes oder durch aufmodulierte Kennsignale für Mono, Stereo und Zweisprachen entstehen. Wegen der geringen Bandbreite der Tonträger und des Pilotträgers können diese daher mühelos auf dem Band untergebracht werden, ohne daß eine Störung zwischen diesen Trägern entsteht.

Der oder die Tonträger und der Pilotträger können bei der Wiedergabe ohne frequenzselektive Trennung voneinander mit einem gemeinsamen Bandpaß ausgewertet und einer nichtlinearen Stufe wie z.B. einen Gleichrichter oder einer Mischstufe zugeführt werden. Die nichtlineare Stufe liefert dann u.a. als Mischprodukt in erwünschter Weise die Differenzfrequenz zwischen dem Pilotträger und dem Tonträger, die dann unmittelbar oder nach weiterer Frequenzumsetzung als von Zeitfehlern befreiter Tonträger für die Wiedergabe verwendet werden kann. Dadurch ergibt sich ein geringer Schaltungsaufwand bei der Wiedergabe.

Ein weiterer Vorteil besteht darin, daß der Pilotträger bei der Aufnahme nicht mit der Zeilenfrequenz des Videosignals verkoppelt sein muß. Er kann auch in einem freischwingenden stabilen Quarzoszillator erzeugt werden, da die zum Zeitfehlerausgleich notwendige Modulation des Pilotträgers zwangsläufig dadurch erfolgt, daß dieser Pilotträger zusammen mit dem übrigen Signal aufgezeichnet ist. Ein weiterer Vorteil besteht darin, daß der Pilotträger zusätzlich zur Kennung von Mono-, Stereo-und Zweisprachenbetrieb dienen und die erforderlichen Umschaltungen der Decoder vornehmen kann. Zu diesem Zweck ist der Pilotträger beispielsweise mit unterschiedlichen Frequenzen in der Amplitude moduliert.

Die Erfindung wird im folgenden anhand der Zeichnung erläutert. Darin zeigen

Fig. 1 die Frequenzlage der verschiedenen aufgezeichneten Signale,

Fig. 2 ein Blockschaltbild für die Aufnahme und

Fig. 3 ein Blockschaltbild für die Wiedergabe.

Die folgende Aufstellung zeigt die in der Beschreibung und in der Zeichnung verwendeten Symbole und Frequenzangaben für die auftretenden Signale.

T1 1. Intercarrier Tonträger 5,5 MHz

T2 2. Intercarrier Tonträger 5,742 MHz

T1u 1. umgesetzter Tonträger 6,125 MHz = 392 * fH

T2u 2. umgesetzter Tonträger 6,367 MHz = 407,5 * fH

T1z 1. Zwischen-Tonträger bei Wiedergabe 0,125 MHz

T2z 2. Zwischen-Tonträger bei Wiedergabe 0,367 MHz

M1 Umsetz-Mischträger 0,625 MHz = 40 * fH

M2 1. Pilot-Mischträger 5,0 MHz = 320 * fH

M3 2. Pilot-Mischträger 1,0 MHz = 64 * fH

M4 Stabiler Mischträger bei Wiedergabe 5,375 MHz

P Pilotträger 6 MHz = 384 * fH

fH Zeilenfrequenz des BAS-Signals 15,625 kHz

Fu heruntergesetzter Farbträger 0,627 MHz

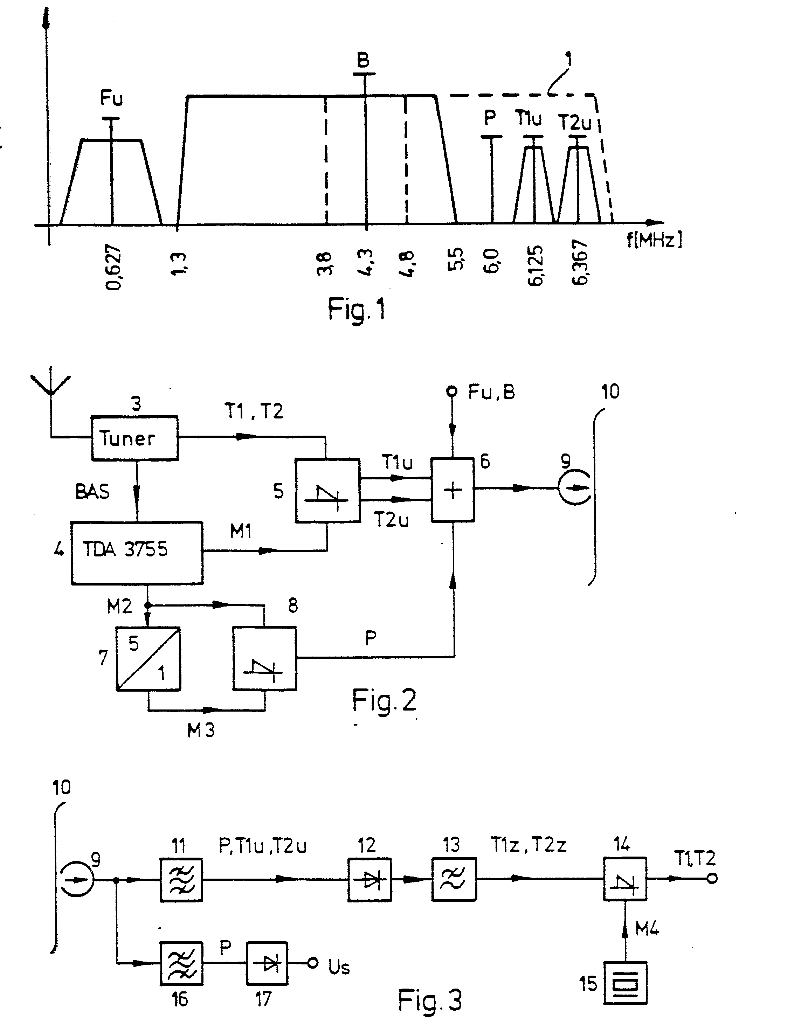

Gemäß Fig. 1 sind auf dem Magnetband mit den rotierenden Videoköpfen aufgezeichnet der in der Frequenz herabgesetzte Farbträger Fu, der mit dem Videosignal frequenzmodulierte Bildträger B mit einer Ruhefrequenz von 4,3 MHz, einem Frequenzhub zwischen 3,8 MHz für den Synchronboden und 4,8 MHz für Spitzenweiß und einem Frequenzspektrum von 1,3 bis 5,5 MHz, ferner der Pilotträger P und die beiden in der Frequenz umgesetzten Tongträger T1u und T2u, die mit zwei Tonsignalen für Stereo-oder Zweisprachenbetrieb moduliert sind. Um die Aufzeichnung der Träger P, T1u, T2u oberhalb des vom Bildträger B eingenommenen Frequenzbereiches zu ermöglichen, ist der verfügbare Frequenzbereich, d.h. der Frequenzgang der Kopf/Band-Kennlinie durch zusätzliche Schaltungsmaßnahmen um den gestrichelt angedeuteten zusätzlichen Frequenzbereich 1 erweitert, d.h. die Frequenzgangkennlinie in diesem Bereich z.B. durch Resonanzüberhöhungen an den Videoköpfen angehoben.

In Fig. 2 gelangt das mit der Antenne 2 empfangene Fernsehsignal auf den Tuner 3, der einerseits die Tonträger T1, T2 und andererseits das BAS-Signal liefert. Das BAS-Signal gelangt an den intergrierten Schaltkreis 4 vom Typ TDA 3755, der aus den Zeilensynchronimpulsen die beiden Mischträger M1, M2 erzeugt. Die Tonträger T1, T2 werden mit dem Mischträger M1 in der Mischstufe 5 auf die beiden in der Frequenz hochgesetzten Tonträger T1u, T2u umgesetzt, die zusammen mit dem Farbträger Fu und dem Bildträger B der Addierstufe 6 zugeführt werden. Der Mischträger M2 und der daraus in dem Frequenzteiler 7 um den Faktor 5 heruntergeteilte Mischträger M3 werden in der Mischstufe 8 zu dem Pilotträger P mit der Frequenz von 6 MHz umgesetzt, der ebenfalls auf die Addierstufe 6 gelangt. Das so gewonnene Signalgemisch gemäß Fig. 1 wird mit den rotierenden Videoköpfen nach dem Prinzip der Schrägspuraufzeichnung auf dem Magnetband 10 aufgezeichnet. Der Pilotträger P braucht nicht aus dem Videosignal abgeleitet zu werden, sondern kann auch in einem freischwingenden Quarzoszillator erzeugt sein.

Fig. 3 zeigt das Blockschaltbild lediglich für die Verarbeitung des Tonsignals. Aus dem Signal vom Ausgang der Videoköpfe 9 werden mit dem Bandpaß 11 mit einem Durchlaßbereich von 5,8 bis 6,5 MHz die Träger P, T1u, T2u ausgewertet und der nichtlinearen Stufe 12 zugeführt. Am Ausgang der Stufe 12 entstehen somit auch Träger mit den Differenzfrequenzen zwischen P und T1u sowie P und T2u. Diese Zwischen-Tonträger T1z. T2z werden frequenzselektiv mit dem Tiefpaß 13 mit einer Grenzfrequenz von 500 kHz ausgewertet und der Mischstufe 14 zugeführt. Die Mischstufe 14 wird außerdem mit dem Mischträger M4 von dem Quarzoszillator 15 gespeist. Durch Mischung entstehen dadurch als Summenfrequenzen wieder die ursprünglichen Tonträger T1, T2 mit den genormten ZF-Frequenzen von 5,5 und 5,742 MHz.

Der Pilotträger P am Eingang der Stufe 12 enthält dieselben Zeitfehler wie die Tonträger T1u, T2u, die durch Geschwindigkeitsschwankungen des Magnetbandes entstehen. Durch die Mischung in der Stufe 12 werden daher diese Zeitfehler ausgeglichen, weil alle drei zugeführten Träger vom Band abgetastet sind und somit den gleichen Zeitfehlern unterliegen.

In dem Bandpaß 16 mit der Durchlaßfrequenz von 6 MHz wird der Pilotträger P allein ausgewertet und dem Detektor 17 zugeführt. Der Pilotträger P ist entsprechend der Fernsehnorm für Mehrkanalton bei Monobetrieb nicht moduliert, bei Stereobetrieb mit einer Frequenz von 117,5 Hz entsprechend etwa fH/133 und bei Zweitonbetrieb mit der Frequenz 274,1 Hz entsprechend etwa fH/57 amplitudenmoduliert. Diese Modulation wird in dem Detektor 17 ausgewertet. Dadurch wird eine Schaltspannung Us erzeugt, die die jeweilige Betriebsart Mono, Stereo oder Zweiton angibt und die entsprechende Umschaltung der Dekoder im Videorecorder oder einem angeschlosenen Fernsehempfänger bewirkt. Ein derart modulierter Pilotträger ist in einem empfangenen Fernsehsignal als zweiter Tonträger mit einer Frequenz von 5,742 MHz bereits senderseitig enthalten. Bei eigener Signalerzeugung z.B. durch eine Kamera wird dieser Pilotträger mit den angegebenen Modulationen für die Kennung zusätzlich erzeugt.

**Ansprüche**

1. Videorecorder mit verbesserter Tonaufzeichnung, bei dem ein mit dem NF-Tonsignal frequenzmodulieter Tonträger T1u, T2u) zusammen mit dem Bildträger aufgezeichnet und bei der Wiedergabe mit einem mit den Zeitfehlern modulierten Mischträger in der Frequenz umgesetzt wird, dadurch gekennzeichnet , daß der Mischträger zusätzlich als Pilotträger (P) aufgezeichnet wird.

2. Recorder nach Anspruch 1, dadurch gekennzeichnet , daß die Frequenzen des Pilotträgers (P) und des Tonträgers (T1u, T2u) in der gleichen Größenordnung liegen.

3. Recorder nach Anspruch 1 oder 2, dadurch gekennzeichnet, daß die Frequenzen in der Größenordnung von 6 - 6,5 MHz liegen.

4. Recorder nach Anspruch 1, dadurch gekennzeichnet, daß der Pilotträger (P) und der Tonträger (T1u, T2u) oberhalb des vom Bildträger (B) eingenommenen Frequenzbereiches (1,3 - 5,5 MHz) aufgezeichnet werden.

5. Recorder nach Anspruch 1, dadurch gekennzeichnet, daß der Pilotträger (P) durch Frequenzvervielfachung der Zeilensynchronimpulse gewonnen wird.

6. Recorder nach Anspruch 1, dadurch gekennzeichnet, daß bei der Wiedergabe der Pilotträger (P) und der Tonträger (T1u,T2u) zusammen mit einem Bandpaß (11) ausgewertet und ohne frequenzselektive Trennung voneinander einer nichtlinearen Stufe (12) zugeführt werden, aus deren Ausgangsspannung ein Zwischen-Tonträger (T1z, T2z) mit der Differenzfrequenz zwischen Pilotträger (P) und Tonträger (T1u, T2u) ausgewertet wird (Fig. 3).

7. Recorder nach Anspruch 6, dadurch gekennzeichnet, daß der Zwischen-Tonträger (T1z, T2z) in einer Mischstufe (14) mit einem in einem freischwingenden Oszillator (15) erzeugten stabilen Mischträger (M4) auf die genormte Ton-ZF-Frequenz (5,5 bzw. 5,742 MHz) umgesetzt wird (Fig. 3).

8. Recorder nach Anspruch 1, dadurch gekennzeichnet, daß zwei in der Frequenz gegeneinander versetzte modulierte Tonträger (T1u, T2u) für Stereo-oder Zweisprachenbetrieb aufgezeichnet werden.

9. Recorder nach Anspruch 1, dadurch gekennzeichnet, daß der Pilotträger entsprechend der Norm für Mehrkanalton bei Monobetrieb unmoduliert, bei Stereobetrieb mit einer ersten Frequenz (117,5 Hz) und bei Zweitonbetrieb mit einer zweiten Frequenz (274,1 Hz) amplitudenmoduliert ist.

10. Recorder nach Anspruch 9, dadurch gekennzeichnet, daß bei der Wiedergabe der Pilotträger (P) frequenzselektiv ausgewertet wird (Stufe 16) und einem Detektor (17) zugeführt wird, der eine von der jeweiligen Betriebsart Mono. Stereo oder Zweiton abhängige Schaltspannung (Us) zur Umschaltung der Dekoder erzeugt.

Fig.1

Fig.2

Fig.3

H85/022